**Europäisches Patentamt**

(19) **European Patent Office**

**Office européen des brevets**

(11) **EP 0 579 253 B1**

(12) **EUROPEAN PATENT SPECIFICATION**

(45) Date of publication and mention of the grant of the patent:
**28.02.1996 Bulletin 1996/09**

(51) Int. Cl.$^6$: **B05D 3/02**, B05D 7/16

(21) Application number: **93111468.0**

(22) Date of filing: **16.07.1993**

(54) **Process of coating a corrosion protect film on a steel substrate**

Verfahren zum Aufbringen einer korrosionshemmenden Schicht auf einen Stahlgegenstand

Procédé pour appliquer un film protecteur contre la corrosion sur un substrat d'acier

(84) Designated Contracting States:
**DE GB**

(30) Priority: **16.07.1992 JP 188512/92**

(43) Date of publication of application:
**19.01.1994 Bulletin 1994/03**

(73) Proprietors:
• **Nippon Paint Co., Ltd.**
  **Osaka-shi Osaka-fu (JP)**
• **MITSUBISHI JUKOGYO KABUSHIKI KAISHA**
  **Tokyo (JP)**

(72) Inventors:
• **Ueda, Akihiro**
  **Neyagawa-shi, Osaka 572 (JP)**
• **Ishihara, Shinichi**
  **Neyagawa-shi, Osaka 572 (JP)**
• **Shibata, Akio,**
  **c/o Mitsubishi Jukogyo Kaisha**
  **Nagasaki-shi, Nagasaki-ken (JP)**
• **Yamada, Jyunichi,**
  **c/o Mitsubishi Jukogyo Kaisha**
  **Nagasaki-shi, Nagasaki-ken (JP)**

(74) Representative: **Goddar, Heinz J., Dr. et al**
  **D-80801 München (DE)**

(56) References cited:
EP-A- 0 282 073                DE-A- 3 245 444
GB-A- 2 043 486

## Description

The present invention is directed to a process of coating a corrosion protect film on a steel substrate for providing excellent corrosion resistance to huge steel constructions such as ships, plants, and bridges, etc.

EP-A-0 282 073 relates to a highly corrosion-resistant, multi-layer coated steel sheet, and includes an undercoat film obtained by galvanization or zinc-alloy plating and a chromate coated film thereon, on which a resin-composition film is further applied.

GB-A-2 043 486 discloses a process for curing a coated film of an alkyl silicated type zinc rich paint comprises coating a substrate with a film of an alkyl silicated type zinc rich paint.

Thick steel plates are utilized to huge steel structures such as ships, plants and bridges, etc. However, since the steel structures are attacked for many years by their environments, failures of the steel structures occur often without warning and with sometimes catastrophic results. Therefore, it is important to improve the corrosion resistance of the steel plates. In general, a corrosion protect film is coated on a steel substrate by the following process including first and second coating steps. That is, since the steel substrate is usually covered with mill scale, the mill scale is removed therefrom by a physical means, e.g., a shot blasting, or a chemical means to obtain a clean surface of the steel substrate prior to the first coating step. In the first coating step, the clean surface of the steel substrate is coated with a zinc primer paint as a rust preventive paint to form a zinc primer film having a thickness of 5 to 30 μm thereon. The zinc primer film can provide excellent corrosion resistance to the steel substrate by an anode effect of a zinc powder contained therein. Thus coated steel substrate is manufactured to a desired shape by welding or cutting, etc., if necessary. After the manufacturing, the second coating step is performed, in which a solvent type paint is coated on the zinc primer film so as to have a dry thickness of 100 to 500 μm thereof, thereby obtaining the corrosion protect film on the steel substrate.

By the way, since the first coating step is usually performed to flat steel plates, it would be easy to automate the first coating step in a factory. However, the second coating step is often done by workers because it is performed to manufactured steel substrates having all kinds of shapes. Especially, when the solvent type paint are used in the second coating step, there has been a problem of losing the worker's health and that the solvent catches fire easily. In addition, an air pollution problem may be caused by exhausting a volatile solvent contained in the solvent type paint to the atmosphere.

Recently, non-solvent type paints, for example, a powder paint, are used instead of the solvent type paint for resolving these problems. Since an epoxy resin powder paint has good durability, it is useful as the powder paint to the ships, etc. However, since the powder paint is coated on the zinc primer film, and then baked thereto at a baking temperature of about 150°C to 250°C to obtain a powder paint film thereon, a thermal shrinkage stress generates in the powder paint film during a cooling period from the baking temperature, so that there has been a problem of decreasing an adhesive strength of the primer film to the steel substrate. In addition, since the zinc primer film does not have enough heat resistance to the baking temperature, there has been a problem of causing deterioration of the zinc primer film during the baking.

An object of the present invention is to resolve the above problems and to provide a process of coating a corrosion protect film on a steel substrate. The process includes first and second coating steps. In the first coating step, a primer paint with anodic activity is prepared, which comprises at least 30 wt-% of a zinc powder as a pigment having the anodic activity and as a vehicle resin an initial condensate obtained by hydrolysis of at least one alkoxysilane which is expressed by the following formula;

$$Si\,(R_1)_x\,(OR_2)_{4-x}$$

wherein $R_1$ stands for a $C_1$ to $C_5$ alkyl group or alkenyl group, $R_2$ stands for a $C_1$ to $C_5$ alkyl group, and x is 0 or 1, or a mixture of a colloidal silica and the initial condensate. A surface of the steel substrate is coated with the primer paint, and then dried to obtain a primer film. Subsequently, in the second coating step, a powder paint is coated on the primer film, and then baked thereto at a baking temperature to obtain a powder paint film thereon. Since the powder paint having a thermal shrinkage stress of 40 kg/cm$^2$ or less is used in the present invention, a decrease in the adhesion strength of the primer film to the steel substrate, which is caused by the thermal shrinkage stress of the powder paint film, is inhibited, so that the adhesion strength enough for practical use is obtained. In addition, since the primer paint of the present invention has good thermal resistance at the baking temperature, the primer paint as a rust preventive paint is not deteriorated during the baking. Therefore, the corrosion protect film of the present invention substantially consists of the primer film and the powder paint film, and is formed on the steel substrate with good adhesion strength without deterioration of the primer film.

In a preferred embodiment of the present invention, the colloidal silica is a solvent type colloidal silica, the primer paint includes at least 30 wt% of the zinc powder in the primer film. In case of using as the vehicle resin a mixture of the solvent type colloidal silica and the initial condensate, it is also preferred that a weight ratio of $SiO_2$ contained in the initial condensate to $SiO_2$ contained in the solvent type colloidal silica is in a range of 10/90 to 85/15 based upon a non-volatile content.

The powder paint is an epoxy resin base powder paint.

In another preferred embodiment of the present invention, the primer paint is coated on the steel substrate such that a thickness of the primer film is in a range of 5 to 30 μm, and the powder paint is coated on the primer film such that a thickness of the powder paint film is in a range of 70 to 500 μm.

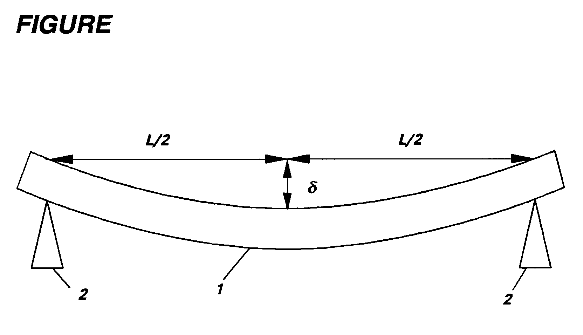

The features and advantages of the present invention will become more apparent from the following description taken in conjunction with the attached drawing.

BRIEF DESCRIPTION OF THE DRAWING

FIGURE is a schematic diagram illustrative of a method of measuring a thermal shrinkage stress of a film coated on a substrate.

DETAILED DESCRIPTION OF THE INVENTION

In the present invention, a corrosion protect film is coated on a steel substrate by the following process including first and second coating steps. In the first coating step, a primer paint with anodic activity and heat resistance is prepared. The primer paint includes a zinc powder as a pigment with anodic activity and as a vehicle resin with heat resistance an initial condensate obtained by hydrolysis of at least one alkoxysilane which is expressed by the following formula;

$$Si (R_1)_x (OR_2)_{4-x}$$

wherein $R_1$ stands for a $C_1$ to $C_5$ alkyl group or alkenyl group, $R_2$ stands for a $C_1$ to $C_5$ alkyl group, and x is 0 or 1, or a mixture of a colloidal silica and the initial condensate. A surface of the steel substrate is coated with the primer paint, and then dried to obtain a primer film. The zinc powder is incorporated such that a zinc content in the primer film is at least 30 wt%. When the zinc content is less than 30 wt%, enough corrosion resistance as a rust preventive paint is not given to the primer paint. The zinc powder is dispersed in a solvent such as an alcohol or ether, etc., together with a coloring pigment, extender, or a rust preventive pigment, etc., to obtain a zinc paste. The zinc paste is mixed and sufficiently agitated with the vehicle resin to obtain the primer paint. On the other hand, as the vehicle resin, it is preferred in the present invention that the colloidal silica is a solvent type colloidal silica and the vehicle resin is a mixture of the solvent type colloidal silica and the initial condensate. The hydrolysis of the alkoxysilane is proceeded in a lower alcohol such as isopropyl alcohol by using an acid aqueous solution, for example, a diluted hydrochloric acid. In addition, it is also preferred that a weight ratio of $SiO_2$ contained in the initial condensate to $SiO_2$ contained in the solvent type colloidal silica is in a range of 10/90 to 85/15 based upon a non-volatile content. When the ratio is less than 10/90, it tends to cause a defective structure in the primer film. On the contrary, when the ratio is more than 85/15, it has a tendency that the heat resistance of the primer film becomes poor.

In the second coating step, a powder paint is coated on the primer film, and then baked thereto at a baking temperature to obtain a powder paint film on the primer film. A thermal shrinkage stress of the powder paint is 40 kg/cm² or less, and more preferably 30 kg/cm² or less. When the thermal shrinkage stress of the powder paint is more than 40 kg/cm², a considerable decrease in the adhesion strength of the primer film to the steel substrate would be realized when the powder paint film is cooled from the baking temperature. By the way, the thermal shrinkage stress mentioned in this specification is defined as a stress resulting from a shrinkage of the powder paint at the cooling thereof from the baking temperature. A value of the thermal shrinkage stress is calculated by the equation (I), which is printed in "A research of a cellulose derivative paint (Reports No. 5 and 6)" by Yukihiko Inoue on page 148 of Journal of Industrial Chemistry No. 46, 1943.

That is, a powder paint is coated on a metal sheet having the known Young's modulus, for example, phosphor bronze, etc., and then baked to the metal sheet at a baking temperature to obtain a powder paint film thereon. The powder paint film is cooled in a thermoregulator kept at the temperature of 20°C and the relative humidity of 65%. In this time, since a thermal shrinkage coefficient of the powder paint film is larger than that of the metal sheet, the powder paint coated metal sheet is curved by the difference between the thermal shrinkage coefficients. After the cooling, thus curved metal sheet is set on two knife edges 2, as shown in FIGURE. The value of the thermal shrinkage stress **P** is calculated by substituting to the equation (I) a deflection δ of the curved metal sheet and a distance **L** between the knife edges 2, etc., which are measured by a microscope,

$$P = \{1/[6h_1(h_1+h_2)]\} \times [E_1 h_1{}^3/(1-v_1{}^2) + E_2 h_2{}^3/(1-v_2{}^2)] \times 1/\rho \tag{I}$$

wherein,

P;      Thermal shrinkage stress (kg/cm²)
$h_1$;      Thickness of film

$h_2$;     Thickness of metal sheet

$\nu_1$;     Poisson ratio of film

$\nu_2$;     Poisson ratio of metal sheet

$E_1$;     Young's modulus of film

$E_2$;     Young's modulus of metal sheet

$\delta$ ;     Deflection

$L$ ;     Distance between knife edges

$\rho$ ;     Radius of curvature $\{\rho = (L^2/8\delta) + (\delta/2)\}$.

It is preferred that the powder paint of the present invention is an epoxy resin powder paint having the thermal shrinkage stress of 40 kg/cm² or less, and more preferably an epoxy resin powder paint having the thermal shrinkage stress of 30 kg/cm² or less and a low permeability of corrosives. The epoxy resin powder paint is prepared by incorporating an epoxy resin or its mixture with a curing agent, the pigments and another additives for providing a levelling effect and uniform incorporation, and preventing the occurrence of pin-holes. The epoxy resin is at least one flexible epoxy resin selected from the group consisting of a polysulfide modified epoxy resin, a modified epoxy resin of a glycol including the primary hydroxyl group, a dimer acid modified epoxy resin, a CTBN (Carboxyl reactivity terminal position Butadiene Acrylonitrile) modified epoxy resin, an ATBN (Amine reactivity terminal position Butadiene Acrylonitrile) modified epoxy resin, and an epoxy resin including silyl group, etc. The mixture of the epoxy resin may include, for example, a modified epoxy resin obtained by an additional reaction of the flexible epoxy resin with bisphenol A, and a glycidyl ether type epoxy resin of bisphenol F, and a mixture of the flexible epoxy resin and bisphenol A, and the glycidyl ether type epoxy resin of bisphenol F. The curing agent may include a phenol resin, amide resin, amine resin, polyester resin, hydrazide resin, and an acid anhydride, etc. The pigments may include the extender such as a clay, talc, and sedimental barium sulfate, etc., the coloring pigment such as ferrous oxide, titanium oxide, and cyanine blue, etc., and the rust preventive pigment such as zinc phosphate, zinc chromate, and strontium chromate, etc. It is preferred that a ratio of the pigments in the powder paint film is in a range of 3 to 30 wt%. The additives may include an acrylic resin, urea resin and a silicon resin, etc. It is preferred that a ratio of the additives in the powder paint film is about 10 wt% or less. If necessary, the powder paint or the primer paint may include an optional additive such as a levelling agent, a thixotropy agent and an antifoaming agent, etc., which are utilized in an usual paint. In addition, the powder paint or the primer paint may include a powder such as an aluminum powder, and a mica powder, etc., a flake-like material such as a glass flake, etc., and a fibrous material.

For example, the epoxy resin or the mixture, the curing agent, the pigments and the additives are put together in a hopper, preliminarily kneaded by a high speed mixer, and then sufficiently kneaded with a heat kneader to obtain a kneaded mixture. The kneaded mixture is cooled to obtain a solidified mixture. The solidified mixture is crashed to a fine powder having a particle size optimum for proceeding an electrostatic painting. After classification of the fine powder, the powder paint of the present invention is obtained.

After mill scale covering a surface of the steel substrate, e.g., a steel plate or a steel pipe, is removed from the surface by a physical means, e.g., a shot blasting, or a chemical means, the primer paint is coated on the surface by, for example, an air-less automatic painting machine, so as to form the primer film having a thickness of 5 to 30 μm thereon. The primer paint coated on the steel substrate is dried in the atmosphere in general. However, if necessary, it is possible to perform the drying of the primer paint by exposing thus coated steel substrate in steam or spraying an aqueous solution including an acid or base thereto. The coated steel substrate is machined to a desired shape by welding or cutting, etc., prior to coating the powder paint thereon. The powder paint is coated on the primer film by, for example, an electrostatic painting machine, and then baked to the primer film at the baking temperature for a baking time period to obtain the powder paint film having a thickness of 70 to 500 μm thereon. The baking is proceeded in a furnace such as a gas furnace, electric furnace, far-infrared furnace or a radio-frequency furnace, etc. The baking time period is determined in accordance with a furnace condition and a size or shape of the steel substrate, etc.

Therefore, the corrosion protect film of the present invention substantially consists of the primer film and the powder paint film. Since the primer paint has the heat resistance, the primer film can maintain its corrosion resistance even after the baking. In addition, since the powder paint having the thermal shrinkage stress of 40 kg/cm² or less is coated on and baked to the primer film, the adhesion strength of the primer film to the steel substrate would be not decreased by the thermal shrinkage stress of the powder paint film. The process of the present invention can provide the corrosion protect film with good adhesion strength to huge steel structures such as ships, plants storing a corrosive substance, e.g., crude oil, and bridges, which are severely attacked for many years by the embodiments.

EXAMPLE 1

[Preparation of primer paint A ]

Alkoxysilanes consisting of 100 parts by weight of tetraethoxysilane and 20 parts by weight of vinyltrimethoxysilane, and 122.3 parts by weight of isopropyl alcohol as an alcohol were put together in a reaction vessel. 21 parts by weight of 0.01N hydrochloric acid was dripped over 1 hour to a mixture of the alkoxysilanes and the alcohol, while keeping the reaction vessel at the temperature of 40°C and agitating the mixture. After the dripping, the agitating was continued for one more hour to obtain an initial condensate formed by hydrolysis of the alkoxysilanes. 25 parts by weight of the initial condensate was incorporated with 25 parts by weight of a solvent type colloidal silica, 35 parts by weight of a zinc powder, 14.5 parts by weight of a calcined clay and 0.5 parts by weight of an antisagging agent, so that a primer paint A including the initial condensate and the colloidal silica was obtained. The solvent type colloidal silica was prepared by diluting a methanol silica sol (manufactured by Nissan Chemical Industries Co., Ltd.) with isopropyl alcohol so as to contain 15 wt% of $SiO_2$ therein. A binder ignition loss of the primer paint A is 24 wt%.

[ Preparation of powder paint C ]

A mixture consisting of 61.0 parts by weight of Epomik SR35 (trade name of epoxy resin manufactured by Mitsui Petro Chemical Industries Co., Ltd.) which is a rubber modified epoxy resin having the epoxide equivalent weight (EEW) of 1000, 14.8 parts by weight of Epikure 171 (trade name of curing agent manufactured by Yuka Shell Epoxy Co., ltd.) which is a phenol resin curing agent having the active hydrogen equivalent of 250, 11.8 parts by weight of titanium oxide, 11.9 parts by weight of a clay, and 0.5 parts by weight of a levelling agent, was preliminarily kneaded by a high speed mixer, and then sufficiently heat-kneaded with Buss Ko-kneader to obtain a kneaded mixture. The kneaded mixture was cooled by a belt cooler, crashed to a coarse powder, and then atomized to a fine powder by an atomizer. The fine powder was classified by a shiver to obtain a powder paint C having a particle size preferable for electrostatic painting. The powder paint C has the thermal shrinkage stress of about 29 kg/cm$^2$.

A corrosion protect film of EXAMPLE 1 was formed on a steel plate in accordance with the following process. The steel plate, which is SS-41 of Japanese Industrial Standard and has the size of 3.2 mm x 75 mm x 150 mm, was shot-blasted to remove mill scale therefrom prior to coating the primer paint A thereon. Subsequently, the primer paint A was coated on the steel plate to obtain a primer film having the thickness of about 15 μm. After the primer paint coated on the steel plate was dried for 10 days in the open-air, the powder paint C was coated on the primer film by an electrostatic painting machine to obtain a powder paint film having the thickness of about 300 μm thereon. Continuously, the powder paint C coated on the primer film was baked thereto in a hot air type electric furnace at the baking temperature of 200°C for 25 minutes, so that the corrosion protect film of EXAMPLE 1 was obtained on the steel plate.

EXAMPLE 2

[Preparation of powder paint D]

A powder paint D of EXAMPLE 2 was prepared by the substantially same proceeding of EXAMPLE 1 except for using instead of the mixture of EXAMPLE 1 a mixture consisting of 62.7 parts by weight of Epikote DX355 (trade name of epoxy resin manufactured by Yuka Shell Epoxy Co., ltd.) which is a dimer acid modified epoxy resin having the epoxide equivalent weight (EEW) of 1200, 13.1 parts by weight of N-12 (trade name of curing agent manufactured by Japan Hydrazine Co., Inc.) which is dodecanoic acid dihydrazide having the active hydrogen equivalent of 130, 11.8 parts by weight of titanium oxide, 11.9 parts by weight of the clay, and 0.5 parts by weight of the levelling agent. The powder paint D has the thermal shrinkage stress of about 18 kg/cm$^2$.

A corrosion protect film of EXAMPLE 2 was formed on the steel plate in accordance with the substantially same process of EXAMPLE 1 except for using the powder paint D instead of the powder paint C.

EXAMPLE 3

[Preparation of powder paint E]

A powder paint E of EXAMPLE 3 was prepared by the substantially same proceeding of EXAMPLE 1 except for using instead of the mixture of EXAMPLE 1 a mixture consisting of 63.1 parts by weight of Epikote DX355 (trade name of epoxy resin manufactured by Yuka Shell Epoxy Co., ltd.) which is a Dimer acid modified epoxy resin having the epoxide equivalent weight (EEW) of 1200, 12.7 parts by weight of the Epikure 171 (trade name of curing agent manufactured by Yuka Shell Epoxy Co., ltd.) which is a phenol resin curing agent having the active hydrogen equivalent of 250, 11.8 parts by weight of titanium oxide, 11.9 parts by weight of the clay, and 0.5 parts by weight of the levelling agent. The powder paint E has the thermal shrinkage stress of about 36 kg/cm$^2$.

A corrosion protect film of EXAMPLE 3 was formed on the steel plate in accordance with the substantially same process of EXAMPLE 1 except for using the powder paint E instead of the powder paint C.

EXAMPLE 4

[Preparation of Primer paint B]

100 parts by weight of tetraethoxysilane as an alkoxysilane and alcohols consisting of 50 parts by weight of isobutyl alcohol and 24.7 parts by weight of isopropyl alcohol were put together in the reaction vessel. 0.7 parts by weight of 0.1N hydrochloric acid was dripped over 1 hour to a mixture of the alkoxysilane and alcohols, while keeping the reaction vessel at the temperature of 40°C and agitating the mixture. After the dripping, the agitating was continued for one more hour to obtain an initial condensate formed by hydrolysis of the alkoxysilane. 40 parts by weight of the initial condensate was incorporated with 10 parts by weight of the solvent type colloidal silica, 30 parts by weight of the zinc powder, 14.5 parts by weight of the calcined clay and 0.5 parts by weight of the antisagging agent, so that a primer paint B including the initial condensate and the colloidal silica was obtained. A binder ignition loss of the primer paint B is 24 wt%.

A corrosion protect film of EXAMPLE 4 was formed on the steel plate in accordance with the substantially same process of EXAMPLE 1 except that the primer paint B and the powder paint D were used instead of the primer paint A and the powder paint C, respectively.

EXAMPLE 5

A corrosion protect film of EXAMPLE 5 was formed on the steel substrate by coating the primer paint A and the powder paint C in accordance with the substantially same process of EXAMPLE 1 except that the thickness of the primer film is about 15 μm, and the thickness of the powder paint film is about 80 μm.

EXAMPLE 6

A corrosion protect film of EXAMPLE 6 was formed on the steel plate by coating the primer paint A and the powder paint C in accordance with the substantially same process of EXAMPLE 1 except that the thickness of the primer film is about 10 μm, and the thickness of the powder paint film is about 80 μm.

COMPARATIVE EXAMPLE 1

[Preparation of powder paint F]

A powder paint F of COMPARATIVE EXAMPLE 1 was prepared by the substantially same proceeding of EXAMPLE 1 except for using instead of the mixture of EXAMPLE 1 a mixture consisting of 57.1 parts by weight of Epikote 1004 (trade name of epoxy resin manufactured by Yuka Shell Epoxy Co., ltd.) which is bisphenol A type epoxy resin having the epoxide equivalent weight (EEW) of 950, 14.5 parts by weight of the Epikure 171 (trade name of curing agent manufactured by Yuka Shell Epoxy Co., ltd.) which is the phenol resin curing agent having the active hydrogen equivalent of 250, 11.2 parts by weight of titanium oxide, 16.7 parts by weight of the clay, and 0.5 parts by weight of the levelling agent. The powder paint F has the thermal shrinkage stress of about 62 kg/cm$^2$.

A corrosion protect film of COMPARATIVE EXAMPLE 1 was formed on the steel plate in accordance with the substantially same process of EXAMPLE 1 except for using the powder paint F instead of the powder paint C.

COMPARATIVE EXAMPLE 2

A corrosion protect film of COMPARATIVE EXAMPLE 2 was formed on the steel plate in accordance with the substantially same process of EXAMPLE 1 except for using an epoxy resin zinc primer paint instead of the primer paint A. The epoxy resin zinc primer paint is "Nippe Zinky-800" (trade name of primer paint manufactured by Nippon Paint Co., Ltd.) which is a zinc rich paint including an epoxy resin as a vehicle resin.

COMPARATIVE EXAMPLE 3

A corrosion protect film of COMPARATIVE EXAMPLE 3 was formed on the steel plate in accordance with the substantially same process of EXAMPLE 1 except that the epoxy resin zinc primer paint of "Nippe Zinky-800" and the powder paint F were used instead of the primer paint A and the powder paint C, respectively.

6

COMPARATIVE EXAMPLE 4

A powder paint film of COMPARATIVE EXAMPLE 4 was formed on the steel plate in accordance with the substantially same process of EXAMPLE 1 except that the powder paint C was directly coated on the steel plate without using the primer paint A, and also the thickness of the powder paint film is about 80 µm.

The following tests 1 to 3 were performed to the corrosion protect films of EXAMPLES 1 to 6 and COMPARATIVE EXAMPLES 1 to 4 coated on the steel plates.

Test 1 : Adhesion strength of corrosion protect film

After the baking of the powder paint, the powder paint film formed on the primer film was cooled at the normal temperature for 1 hour. In accordance with an adhesion test prescribed in JIS (Japanese Industrial Standard) K 5400 8.5.1, an adherence of the corrosion protect film to the steel plate is evaluated. That is, 2 mm spaced apart horizontal and vertical cuts were formed in the surface of the corrosion protect film so as to present a total of 25 squares by a cutter knife. The depth of cut is equal to the thickness of the corrosion protect film. An adhesive tape was placed on the corrosion protect film to be firmly adhered thereto by applying a rubbing over the tape. Thereafter, the tape was peeled off instantaneously with the one end of the tape pulled upward to observe the conditions of the cuts in the corrosion protect film. Evaluation is given in accordance with the following EVALUATION TABLE, in which larger evaluation points indicate superior adherence.

In addition, an adhesion strength of the corrosion protect films was measured by an adhesion tester (manufactured by Elcometer Ltd.). Results of the Test 1 are listed in TABLES 1 and 2.

| EVALUATION TABLE (JIS K 5400 8.5.1 (5)) | |
|---|---|
| point | Observed conditions of the cuts |
| 10 | Every cut is left thin with smooth edges, and no film flaking is seen either at the whole area of every square or even at intersections of cuts. |
| 8 | Film flaking is seen only at some intersections to a slight extent but does not extend over the whole area of any squares, and flaked area remains 5 % or less of the total area. |
| 6 | Film flaking is seen both at the edges and at the intersections of the cuts, and flaked area occupies 5 to 15 % of the total area. |
| 4 | Film flaking is seen to extend over the edges of the cuts, and flaked area occupies 15 to 35 % of the total area. |
| 2 | Film flaking is seen to extend over the edges of the cut to a greater width than seen at point 4, and flaked area occupies 35 to 65 % of the total area. |
| 0 | Flaked area reaches 65 % or more of the total area. |

Test 2: Adhesion strength of corrosion protect film after dipping test in a salt water

The corrosion protect film coated on the steel plate was dipped into 3% NaCl aqueous solution kept at the temperature of 40°C for three months. After the three month, the corrosion protect film was removed from the aqueous solution, and then the adherence and adhesion strength thereof to the steel plate were measured in accordance with the same examination methods as the Test 1. In addition, a rate of rust generation relative to the total surface area of the corrosion protect film was examined in accordance with ASTM D610-68. Results of the Test 2 are listed in TABLES 1 and 2. Test 3: Adhesion strength of corrosion protect film after a salt water spray test

The corrosion protect film coated on the steel plate was placed in a salt water spray test apparatus for 700 hours under the conditions established in JIS K 5400 9.1. After the 700 hours, the corrosion protect film was removed from the apparatus, and then the adherence and adhesion strength thereof to the steel plate were measured in accordance with the same examination methods as the Test 1. In addition, the rate of rust generation relative to the total surface area of the corrosion protect film was examined in accordance with ASTM D610-68. Results of the Test 3 are listed in TABLES 1 and 2.

Since the corrosion protect film of COMPARATIVE EXAMPLE 1 was formed on the steel plate by coating the powder paint F having the thermal shrinkage stress of 62 kg/cm$^2$, good adherence and adhesion strength thereof to the steel plate are not obtained, which are 2 points and less than 5 kg/cm$^2$, respectively. Therefore, this corrosion protect film is not for practical use. On the other hand, in the corrosion protect films of COMPARATIVE EXAMPLES 2 and 3, since the heat resistance of the epoxy zinc primer paint on the market is not enough for the baking temperature, the primer film was deteriorated by the baking of the powder paint. Especially, discoloration of the primer film was observed on COMPARATIVE EXAMPLE 2. In the powder paint film of COMPARATIVE EXAMPLE 4, rust generation was observed on a surface thereof after the dipping test or the spray test.

However, as shown in TABLE 1, each of the corrosion protect films in EXAMPLES 1 to 6 shows a high adherence of 8 points or more, a high adhesion strength of 20 kg/cm$^2$ or more, and also good corrosion resistance without generating rust thereon. Therefore, each process of EXAMPLES 1 to 6 is useful for providing the corrosion protect film with the high adhesion strength to huge steel structures such as ships, plants, and bridges, which are severely attacked for many years by the embodiments.

EP 0 579 253 B1

The features disclosed in the foregoing description, in the claims and/or in the accompanying drawings may, both, separately and in any combination thereof, be material for realizing the invention in diverse forms thereof.

TABLE 1    Producing conditions and results of Tests 1 to 3 with respect to EXAMPLES 1 to 6

| | | EXAMPLE | | | | | |
|---|---|---|---|---|---|---|---|
| | | 1 | 2 | 3 | 4 | 5 | 6 |
| Primer paint | Paint type | A | A | A | B | A | A |
| | Thickness of primer film ($\mu$m) | 15 | 15 | 15 | 15 | 15 | 10 |
| Powder paint | Paint type | C | D | E | D | C | C |
| | Thickness of powder paint film ($\mu$m) | 300 | 300 | 300 | 300 | 80 | 80 |
| Results of Test 1 | Adherence (point) | 10 | 10 | 8 | 10 | 10 | 10 |
| | Adhesion strength (kg/cm$^2$) | 46 | 55 | 28 | 52 | 49 | 53 |
| Results of Test 2 | Adherence (point) | 10 | 10 | 8 | 10 | 10 | 10 |
| | Adhesion strength (kg/cm$^2$) | 43 | 50 | 25 | 46 | 45 | 43 |
| | Rust generation # | X | X | X | X | X | X |
| Results of Test 3 | Adherence (point) | 10 | 10 | 8 | 10 | 10 | 10 |
| | Rust generation # | X | X | X | X | X | X |

#;    X: No rust generation

TABLE 2 Producing conditions and results of Tests 1 to 3 with respect to COMPARATIVE EXAMPLES 1 to 4

| | | COMPARATIVE EXAMPLE | | | |
|---|---|---|---|---|---|
| | | 1 | 2 | 3 | 4 |
| Primer paint | Paint type | A | Zinc primer paint *1 | Zinc primer paint *1 | ------ |
| | Thickness of primer film ($\mu$m) | 15 | 15 | 15 | ------ |
| Powder paint | Paint type | F | C | F | C |
| | Thickness of powder paint film ($\mu$m) | 300 | 300 | 300 | 80 |
| Results of Test 1 | Adherence (point) | 2 | 8 | 0 *2 | 8 |
| | Adhesion strength (kg/cm$^2$) | <5 | 22 | --- | 23 |
| Results of Test 2 | Adherence (point) | No Test *3 | 0 *2 | No Test *3 | 4 |
| | Adhesion strength (kg/cm$^2$) | | --- | | 10 |
| | Rust generation | | --- | | 1% *4 |
| Results of Test 3 | Adherence (point) | | 0 *2 | | 6 |
| | Rust generation | | --- | | 3% *5 |

*1: Epoxy zinc primer "Nippe Zinky 8000" (trade name of primer paint manufactured by Nippon Paint Co., Ltd.)
*2: Discoloration of primer film was observed.
*3: As adhesion strength of primer film was not good, Tests 2 and 3 were not performed.
*4: Rust generation is 1 % of the total surface area of corrosion protect film.
*5: Rust generation is 3 % of the total surface area of corrosion protect film.

**Claims**

1. A process of coating a corrosion protect film on a steel substrate comprising the steps:

   - preparing a primer paint with anodic activity including a zinc powder as a pigment and an initial condensate as a vehicle resin which is obtained by hydrolyis of at least one alkoxysilane expressed by the following formula

   $$Si\ (R_1)x(OR_2)4\text{-}x$$

   wherein $R_1$ stands for a $C_1$ to $C_5$ alkyl group or alkenyl group, $R_2$ stands for a $C_1$ to $C_5$ alkyl group, and x is 0 or 1;

   - coating a surface of said steel substrate with said primer paint,

   - drying said primer paint coated on said steel substrate to form a primer film thereon, said primer film including at least 30 wt% of said zinc powder;

   - coating an epoxy resin base powder paint having a thermal shrinkage stress of 40 kg/cm$^2$ or less on a surface of said primer film; and

   - baking said powder paint to said primer film at a baking temperature to form a powder paint film thereon, thereby obtaining said corrosion protect film coated on said steel substrate.

2. A process of coating a corrosion protect film on a steel substrate comprising the steps:

   - preparing a primer paint with anodic activity including as a pigment a zinc powder and as a vehicle resin a mixture of a colloidal silica and an initial condensate obtained by hydrolysis of at least one alkoxysilane which is expressed by the following formula,

   $$Si\ (R_1)x(OR_2)4\text{-}x$$

   wherein $R_1$ stands for a $C_1$ to $C_5$ alkyl group or alkenyl group, $R_2$ stands for a $C_1$ to $C_5$ alkyl group, and x is 0 or 1;

   - coating a surface of said steel substrate with said primer paint;

   - drying said primer paint coated on said steel plate to form a primer film thereon, said primer film including at least 30 wt% of said zinc powder;

   - coating an epoxy resin base powder paint having a thermal shrinkage stress of 40 kg/cm$^2$ or less on a surface of said primer film; and

   - baking said powder paint to said primer film at a baking temperature to form a powder paint film thereon, thereby obtaining said corrosion protect film coated on said steel substrate.

3. A process as set forth in claim 2, wherein said colloidal silica is a solvent type colloidal silica, said primer paint includes at least 30 wt% of said zinc powder in said primer film and a weight ratio of $SiO_2$ contained in said initial condensate to $SiO_2$ contained in said solvent type colloidal silica is in a range of 10/90 to 85/15 based upon a non-volatile content.

4. A process as set forth in claim 1 or 2, wherein a thickness of said primer film is in a range of 5 to 30 μm, and a thickness of said powder paint film is in a range of 70 to 500 μm.

**Patentansprüche**

1. Ein Verfahren zum Aufbringen einer korrosionshemmenden Schicht auf einen Stahlgegenstand, welches die Schritte umfaßt:

   - Herstellen einer Grundierfarbe mit anodischer Aktivität, die ein Zinkpulver als ein Pigment und ein Anfangskondensat als ein Trägerharz einschließt, das erhalten wird durch Hydrolyse von wenigstens einem Alkoxysilan, das ausgedrückt wird durch die folgende Formel

$$Si (R_1)x(OR_2)4-x$$

worin $R_1$ für eine $C_1$-$C_5$-Alkylgruppe oder -Alkylengruppe steht, $R_2$ für eine $C_1$-$C_5$-Alkylgruppe steht und x 0 oder 1 ist;

- Beschichten einer Oberfläche von besagtem Stahlgegenstand mit besagter Grundierfarbe;

- Trocknen besagter Grundierfarbe, die auf besagten Stahlgegenstand aufgebracht worden ist, um darauf eine Grundierschicht auszubilden, wobei besagte Grundierschicht wenigstens 30 Gew.-% von besagtem Zinkpulver einschließt;

- Aufbringen einer Pulverfarbe auf Epoxyharz-Basis mit einer Wärmeschrumpfspannung von 40 kg/cm$^2$ oder weniger auf eine Oberfläche von besagter Grundierschicht; und

- Einbrennen besagter Pulverfarbe in besagte Grundierschicht bei einer Brenntemperatur, um darauf eine Pulverfarbschicht auszubilden, wodurch besagte korrosionshemmende Schicht erhalten wird, die auf besagtem Stahlgegenstand aufgebracht ist.

2. Ein Verfahren zum Aufbringen einer korrosionshemmenden Schicht auf einen Stahlgegenstand, welches die Schritte umfaßt:

- Herstellen einer Grundierfarbe mit anodischer Aktivität, die als ein Pigment ein Zinkpulver und als ein Trägerharz eine Mischung aus einem kolloidalen Siliziumdioxid und einem Anfangskondensat einschließt, das durch Hydrolyse von wenigstens einem Alkoxysilan erhalten wird, das ausgedrückt wird durch die folgende Formel

$$Si (R_1)x(OR_2)4-x$$

worin $R_1$ für eine $C_1$-$C_5$-Alkylgruppe oder -Alkenylgruppe steht, $R_2$ für eine $C_1$-$C_5$-Alkylgruppe steht und x 0 oder 1 ist.

- Beschichten einer Oberfläche von besagtem Stahlgegenstand mit besagter Grundierfarbe;

- Trocknen besagter Grundierfarbe, die auf besagte Stahlplatte aufgebracht worden ist, um darauf eine Grundierschicht auszubilden, wobei besagte Grundierschicht wenigstens 30 Gew.-% von besagtem Zinkpulver einschließt;

- Aufbringen einer Pulverfarbe auf Epoxyharz-Basis mit einer Wärmeschrumpfspannung von 40 kg/cm$^2$ oder weniger auf eine Oberfläche von besagter Grundierschicht; und

- Einbrennen besagter Pulverfarbe in besagte Grundierschicht bei einer Brenntemperatur, um darauf eine Pulverfarbschicht auszubilden, wodurch besagte korrosionshemmende Schicht erhalten wird, die auf besagtem Stahlgegenstand aufgebracht ist.

3. Ein Verfahren nach Anspruch 2, wobei besagtes kolloidales Siliziumdioxid ein kolloidales Siliziumdioxid vom Lösungsmittel-Typ ist, besagte Grundierfarbe wenigstens 30 Gew.-% von besagtem Zinkpulver in besagter Grundierschicht einschließt und ein Gewichtsverhältnis von $SiO_2$, enthalten in besagtem Anfangskondensat, zu $SiO_2$, enthalten in besagtem kolloidalem Siliziumoxid vom Lösungsmittel-Typ, in einem Bereich von 10/90 bis 85/15 liegt, bezogen auf den Gehalt an nicht-flüchtigen Substanzen.

4. Ein Verfahren nach Anspruch 1 und 2, wobei die Dicke besagter Grundierschicht in einem Bereich von 5 bis 30 µm liegt und die Dicke von besagter Pulverfarbschicht in einem Bereich von 70 bis 500 µm liegt.

**Revendications**

1. Procédé pour appliquer un film anti-corrosion sur un substrat en acier, comprenant les étapes de :

- préparation d'une couche de peinture d'apprêt ayant une activité anodique, comprenant une poudre de zinc, à titre de pigment, et un condensé initial à titre de résine véhicule, qui est obtenu par l'hydrolyse d'au moins un alcoxysilane exprimé par la formule qui suit

$$Si\ (R_1)\ x\ (OR_2)4\text{-}x$$

dans laquelle $R_1$ représente un groupe alkyle ou alcényle en C1 à C5, $R_2$ représente un groupe alkyle en C1 à C5, et x est la valeur 0 ou 1.

- application de ladite couche de peinture d'apprêt sur une surface dudit substrat en acier ;

- séchage de ladite couche de peinture d'apprêt appliquée en revêtement sur ledit substrat en acier pour former sur ce dernier un film d'apprêt, ledit film d'apprêt comprenant au moins 30 % en poids de ladite poudre de zinc ;

- application d'une peinture en poudre de base résine époxy, ayant une contrainte de rétrécissement thermique de 40 kg/cm² ou moins sur une surface dudit film d'apprêt ; et

- cuisson de ladite peinture en poudre sur ledit film d'apprêt à une température de cuisson pour former dessus un film de peinture en poudre, de manière à obtenir que ledit film anti-corrosion soit appliqué sur ledit substrat en acier.

2. Procédé pour appliquer un film anti-corrosion sur un substrat en acier, comprenant les étapes de :

- préparation d'une couche de peinture d'apprêt ayant une activité anodique, comprenant, à titre de pigment, une poudre de zinc et, à titre de résine véhicule, un mélange d'une silice colloïdale et d'un condensé initial obtenu par l'hydrolyse d'au moins un alcoxysilane, qui est exprimé par la formule qui suit

$$Si\ (R_1)\ x\ (OR_2)4\text{-}x$$

dans laquelle $R_1$ représente un groupe alkyle ou alcényle en C1 à C5, $R_2$ représente un groupe alkyle en C1 à C5, et x est la valeur 0 ou 1.

- application de ladite couche de peinture d'apprêt sur une surface dudit substrat en acier ;

- séchage de ladite couche de peinture d'apprêt appliquée en revêtement sur ledit substrat en acier pour former sur cette dernière une couche de film d'apprêt, ledit film d'apprêt comprenant au moins 30 % en poids de ladite poudre de zinc ;

- application d'une peinture en poudre de base résine époxy, ayant une contrainte de rétrécissement thermique de 40 kg/cm² ou moins, sur une surface dudit film d'apprêt ; et

- cuisson de ladite peinture en poudre sur ledit film d'apprêt à une température de cuisson convenant pour former dessus un film de peinture en poudre, de manière à obtenir que ledit film anti-corrosion soit appliqué sur ledit substrat en acier.

3. Procédé selon la revendication 2, dans lequel ladite silice colloïdale est une silice colloïdale de type solvant, ladite couche de peinture d'apprêt comprenant au moins 30 % en poids de ladite poudre de zinc dans ledit film d'apprêt et un rapport en poids entre le $SiO_2$ contenu dans ledit condensé initial et le $SiO_2$ contenu dans ladite silice colloïdale de type solvant est compris dans une plage allant de 10/90 à 85/15, sur la base d'une teneur en produits non volatils.

4. Procédé selon la revendication 1 ou 2, dans lequel l'épaisseur dudit film d'apprêt est comprise dans une plage allant de 5 à 30 μm, et l'épaisseur dudit film de peinture en poudre est comprise dans la plage allant de 70 à 500 μm.

# FIGURE